# EUROPÄISCHE PATENTSCHRIFT

(11) **EP 3 911 211 B1**
(45) Veröffentlichungstag und Bekanntmachung des Hinweises auf die Patenterteilung: **03.01.2024**
(21) Anmeldenummer: 20703725.0
(22) Anmeldetag: 04.02.2020
(51) Int. Cl.: A47L 9/14

(54) **STAUBSAUGERBEUTEL UND STAUBSAUGER**
VACUUM CLEANER BAG AND VACUUM CLEANER
SAC D'ASPIRATEUR ET ASPIRATEUR

(30) Priorität: 15.02.2019 DE 102019103908
(43) Veröffentlichungstag der Anmeldung: 24.11.2021
(73) Patentinhaber: Wolf PVG GmbH & Co. KG, 32427 Minden (DE)
(72) Erfinder: CZADO, Wolfgang, 32457 Porta Westfalica (DE); SCHANDL, Gerold, 32425 Minden (DE)
(74) Vertreter: Dantz, Jan Henning
(86) Internationale Anmeldenummer: PCT/EP2020/052701
(87) Internationale Veröffentlichungsnummer: WO 2020/164960

(56) Entgegenhaltungen:
- EP-A1- 2 944 247
- DE-C- 926 988
- US-A- 2 158 955
- US-A- 4 618 420

## Beschreibung

Die vorliegende Erfindung betrifft einen Staubsaugerbeutel mit zwei Lagen aus Filtermaterial, die randseitig an mindestens drei Seiten miteinander verbunden sind, wobei an einer vierten Seite zwischen den beiden Lagen zumindest bereichsweise eine Einströmöffnung ausgebildet ist, in die ein Stutzen zur Verbindung mit einem Staubsauger einsteckbar ist, und an der Einströmöffnung ein Federelement vorgesehen ist, das die beiden Lagen in eine geschlossene Position vorspannt, und einen Staubsauger.

Die EP 1 915 939 B1 offenbart einen Filterbeutel für einen Staubsauger, der als Flachbeutel ausgebildet ist und bei dem zwei Lagen aus Filtermaterial randseitig miteinander verschweißt sind. In einer der Lagen ist eine Einströmöffnung ausgestanzt, an der eine Halterplatte zur lösbaren Fixierung des Staubsaugerbeutels in einem Staubsauger angeordnet ist. Im aufgeblähten Zustand besitzt der Staubsaugerbeutel eine Kissenform, weshalb der Staubsaugerbeutel für kleine Staubsauger, beispielsweise Akku-Sticks, trotz guter Filterleistung schlecht geeignet ist.

Die DE 10 2017 209 154 A1 offenbart einen Handstaubsauger, der einen Abscheider aufweist, der nach dem Fliehkraftprinzip arbeitet. Solche Abscheidet sind nur zum Abscheiden grober Partikel geeignet und erzeugen nur eine optische Sauberkeit, da kleinere Partikel nicht zurückgehalten werden. Trotz dieser Nachteile werden am Markt Staubsauger angeboten, die nur eine geringe Saugleistung und einen geringen Abscheidegrad für kleinere Partikel aufweisen, aber eine besonders kompakte Bauform besitzen durch den Einsatz einer kleinen akkubetriebenen Saugeinheit. Ein solcher Bodenstaubsauger wird beispielsweise in der DE 10 2016 105 475 A1 beschrieben.

In der DE 926 988 ist ein Staubbehälter für eine Staubsauger offenbart, bei dem ein Papierbeutel an der Beutelmündung über ein Paar Blattfedern zusammengehalten ist, die an ihren freien Enden über Klemmen aneinander festgelegt sind. Eine ähnliche Gestaltung mit einer zweiteiligen Blattfeder zeigt auch die US 2,158,955.

Es ist daher Aufgabe der vorliegenden Erfindung, einen Staubsaugerbeutel zu schaffen, der auch für kompakte Bauformen von Staubsaugern geeignet ist und die Abscheideleistung solcher Staubsauger verbessert.

Diese Aufgabe wird mit einem Staubsaugerbeutel mit den Merkmalen des Anspruches 1 sowie einem Staubsauger mit einem solchen Staubsaugerbeutel gemäß den Merkmalen des Anspruches 8 gelöst.

Bei dem erfindungsgemäßen Staubsaugerbeutel werden zwei Lagen aus Filtermaterial randseitig an mindestens drei Seiten miteinander verbunden. Die Verbindung kann wahlweise über eine Faltkante oder eine Verbindungsnaht erfolgen, beispielsweise eine Klebenaht oder Schweißnaht. Der so gebildete Innenraum ist über eine Einströmöffnung zugänglich, die an einer vierten Seite zwischen den beiden Lagen zumindest bereichsweise ausgebildet ist, damit ein Stutzen zur Verbindung mit einem Staubsauger eingesteckt werden kann. An der vierten Seite kann somit entweder gar keine Verbindungsnaht vorgesehen sein, oder diese ist nur über einen Teil der Länge der vierten Seite angeordnet, und ein weiterer Teil ist unverbunden und bildet eine Einströmöffnung aus. Dadurch kann der Staubsaugerbeutel besser an längliche, kompakte Kammern in einem Staubsauger angepasst werden. Zudem ist die Herstellung des Staubsaugerbeutels einfach, da das Ausstanzen einer Einströmöffnung in einer der beiden Lagen aus Filtermaterial und die Anbringung der Halteplatte entfällt.

Erfindungsgemäß ist an der Einströmöffnung ein Federelement vorgesehen. Das Federelement istin einen Saum eingefügt, der an den beiden Lagen an der Einströmöffnung ausgebildet ist. Das Federelement spannt die beiden Lagen in eine geschlossene Position vor, so dass nach dem Abziehen des Staubsaugerbeutels von einem Stutzen die Einströmöffnung über das Federelement geschlossen wird. Als Verschlusselement kann zusätzlich zu dem Federelement ein Seil oder ein Spannelement vorgesehen sein, mittels dem die Einströmöffnung nach dem Abziehen von einem Stutzen eines Staubsaugers verschließbar ist. Als Verschlusselement kann zudem ein Klettverschluss, Profilverschluss mit zwei ineinandergreifenden Profilen, Druckknöpfe, Nieten, Magnete oder eine Klemmleiste eingesetzt werden. Zudem können auch selbstschließende Verschlüsse, wie sie von Folienbeuteln bekannt sind, eingesetzt werden. Als Verschlusselement kann auch eine Quetschklemme oder eine Ringfeder eingesetzt werden.

Erfindungsgemäß ist das an der Einströmöffnung des Staubsaugerbeutels vorgesehene Federelement als Blattfeder ausgebildet. Die Blattfeder weist an einem Ende der Einströmöffnung einen Knick in Form einer Biegung um etwa 180° auf. Dadurch kann über ein einziges Federelement die Einströmöffnung in die geschlossene Position vorgespannt werden. Die Blattfeder ist dabei in dem Saum des Staubsaugerbeutels unverlierbar angeordnet.

Für eine optimierte Formgestaltung des Staubsaugerbeutels kann sich die Einströmöffnung vollständig über die Länge an der vierten Seite erstrecken. Dies ermöglicht die Ausbildung eher länglicher Staubsaugerbeutel, die in Draufsicht gesehen zwei Längsseiten und zwei Schmalseiten aufweisen, wobei die Einströmöffnung an einer Schmalseite vorgesehen ist. Die Längsseiten können dabei eine Länge aufweisen, die mindestens dreimal länger, vorzugsweise mindestens viermal länger, sind als die Länge der Schmalseiten. Dementsprechend kann eine umgebende Kammer eines Staubsaugers ebenfalls im Wesentlichen schlauch- oder rohrförmig ausgebildet sein.

Zur Verbesserung der Abdichtung im Bereich der Einströmöffnung kann das Filtermaterial an der Innenseite der Einströmöffnung eine Dichtlage aufweisen, beispielsweise ein bauschiges Vlies oder einen Streifen aus einem elastischen Material, wie Schaumstoff. Der Staubsaugerbeutel kann im Übrigen aus einem Vliesmaterial hergestellt sein, insbesondere einem ein- oder mehrlagigen Vliesstoff.

Der Staubsaugerbeutel wird vorzugsweise in eine Kammer eines Staubsaugers mit einem angetriebenen Gebläse eingesetzt, insbesondere einem über Batterien elektrisch versorgten Staubsauger. Der Staubsauger kann dabei eine Halteeinrichtung aufweisen, die den Staubsaugerbeutel im Bereich der Einströmöffnung fixiert. Der Staubsaugerbeutel ist in dem Staubsauger mit der Einströmöffnung auf einen Stutzen aufgesteckt. An diesem Stutzen können zur besseren Fixierung Haltemittel, wie Rillen, Nuten, Rippen, Magnete oder Klemmelemente vorgesehen sein.

Der Stutzen des Staubsaugers zum Aufstecken des Staubsaugerbeutels weist im Querschnitt vorzugsweise eine von der Kreisform abweichende Kontur auf. Die Querschnittsform kann im Wesentlichen oval sein, wobei die beiden Enden an den Schmalseiten des Ovals auch spitz zulaufen können, um die Abdichtung zwischen Stutzen und Staubsaugerbeutel zu optimieren.

An dem Staubsauger ist bevorzugt ein mechanischer Auswerfer vorgesehen, mittels dem der Staubsaugerbeutel von dem Stutzen an dem Staubsauger abstreifbar ist. Dadurch kann der Staubsaugerbeutel an einer Öffnung der Kammer ausgeworfen werden, ohne dass der Benutzer diesen anfassen muss. Alternativ kann der Staubsaugerbeutel auch händisch vom Stutzen abgezogen und entsorgt werden.

Die Erfindung wird nachfolgend anhand mehrerer Ausführungsbeispiele mit Bezug auf die beigefügten Zeichnungen näher erläutert. Es zeigen:
- Figuren 1A und 1B: zwei Ansichten eines erfindungsgemäßen Staubsaugerbeutels;
- Figur 2: eine Schnittansicht durch den Staubsaugerbeutel der Figur 1 beim Einstecken eines Stutzens;
- Figur 3: eine Schnittansicht durch den Staubsaugerbeutel der Figur 2 mit eingestecktem Stutzen;
- Figur 4: eine Ansicht eines modifizierten Staubsaugerbeutels vor dem Einstecken eines Stutzens,
- Figur 5: eine Ansicht eines modifizierten Staubsaugerbeutels ähnlich Figur 4 vor dem Einstecken eines Stutzens, und
- Figur 6: eine Schnittansicht durch den Stutzen im Bereich der Einströmöffnung.

Ein Staubsaugerbeutel 1 umfasst zwei Lagen 2 aus Filtermaterial, insbesondere aus einen ein- oder mehrlagigen Vliesstoff oder einem Papier, wobei die Lagen 2 deckungsgleich ausgebildet sein können. In Draufsicht gesehen ist jede Lage 2 rechteckförmig ausgebildet, mit zwei gegenüberliegenden Schmalseiten 3 und 4 sowie zwei Längsseiten 5. Die Länge der Längsseiten 5 ist deutlich länger als die Länge der Schmalseiten 3 und 4, vorzugsweise mindestens dreimal so lang.

Der Staubsaugerbeutel 1 ist zur Ausbildung eines Innenraumes an drei Seiten geschlossen, wobei die beiden Lagen 2 aus Filtermaterial wahlweise über eine Faltkante oder eine Verbindungsnaht 6 verbunden sind. Die Verbindungsnaht 6 kann dabei als Schweißnaht oder Klebenaht ausgebildet sein. An der vierten Seite, der Schmalseite 4, sind eine obere Lage 2 und eine untere Lage 20 nicht verbunden, so dass zwischen den beiden Lagen 2 und 20 eine Einströmöffnung 9 ausgebildet ist.

An der Schmalseite 4 ist im Bereich der Einströmöffnung 9 ein Saum 7 gebildet, der durch Umlegen des Filtermaterials und Fixieren durch eine Naht 8 hergestellt sein kann. Der Saum 7 erstreckt sich an der Lage 2 und der Lage 20 aus Filtermaterial und bildet einen Kanal aus, in den ein Verschlusselement einfügbar ist. Als Verschlusselement ist ein Federelement vorgesehen, das die beiden Lagen 2 und 20 in eine geschlossene Position vorspannt. Beispielsweise kann eine metallische Blattfeder eingesetzt werden, die im Bereich einer der Enden einer Längsseite 5 einen Knick aufweist. Zusätzlich kann auch ein anderes Verschlusselement, wie ein Seil oder eine Klammer aus Kunststoff, verwendet werden.

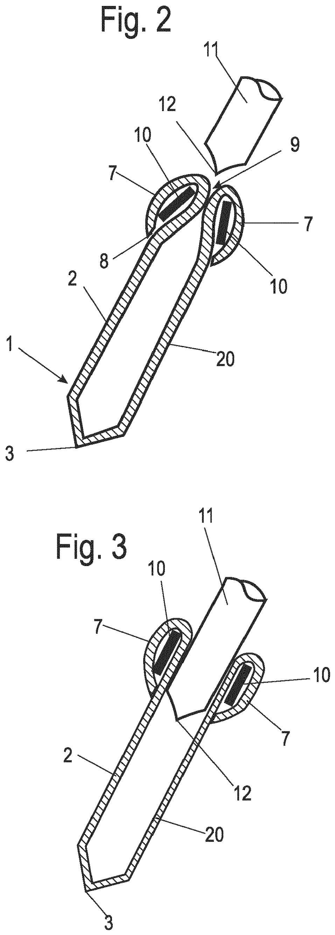

In Figur 2 ist der Staubsaugerbeutel 1 im Schnitt dargestellt, und es ist erkennbar, dass die Lage 2 und die Lage 20 einen Innenraum umgeben, in dem Staub gesammelt werden kann. Die Einströmöffnung 9 ist in einer geschlossenen Position, in der die beiden Lagen 2 und 20 einander kontaktieren, wie dies schematisch dargestellt ist. Die geschlossene Position wird durch ein Federelement 10 gehalten, das als Blattfeder ausgebildet ist, die im Bereich einer Längsseite 5 einen Knick oder Biegung um etwa 180° aufweist. Das Federelement 10 ist dabei in dem Saum 7 an der Einströmöffnung 9 gehalten.

Um den Staubsaugerbeutel 1 in einer Kammer eines Staubsaugers anzuordnen, wird dieser auf einen Stutzen 11 gesteckt, der an seiner Vorderseite eine oder mehrere Spitzen 12 aufweist, die in die Einströmöffnung 9 einfügbar sind.

In Figur 3 ist der Staubsaugerbeutel 1 mit dem eingesteckten Stutzen 11 gezeigt, wobei sich die Lagen 2 und 20 des Staubsaugerbeutels an den Stutzen 11 anlegen. Das Federelement 10 drückt die Lagen 2 und 20 gegen den Stutzen 11 und sorgt somit für eine Abdichtung. Zusätzlich kann im Bereich der Einströmöffnung um den Stutzen 11 ein Dichtelement an den Lagen 2 und 20 aus Filtermaterial vorgesehen sein, beispielsweise ein bauschiger Vliesstoff, ein Streifen aus Schaumstoff oder aus einem anderen elastischen Material.

Wenn der Staubsaugerbeutel 1 mit Staub befüllt ist, kann dieser händisch oder über einen Abstreifer von dem Stutzen 11 abgezogen werden, wobei das Federelement 10 beim Abziehen des Staubsaugerbeutels für ein automatisches Verschließen sorgt. Der Staubsaugerbeutel 1 kann dann entsorgt werden.

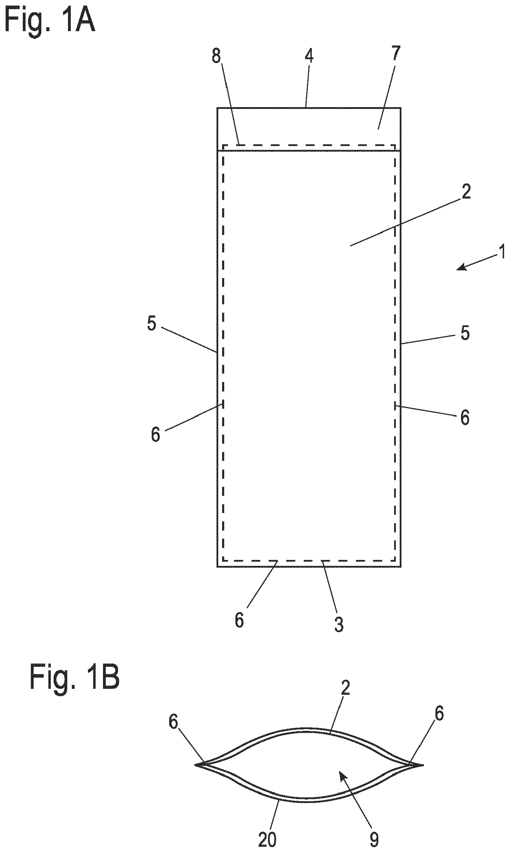

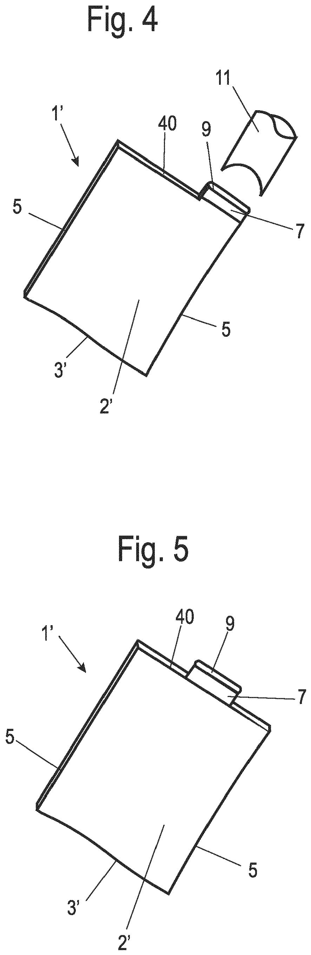

In Figur 4 ist ein modifizierter Staubsaugerbeutel 1' gezeigt, der eine obere Lage 2' und eine deckungsgleiche untere Lage aufweist, die an zwei Längsseiten 5 und einer Schmalseite 3' miteinander über eine Naht oder eine Faltkante verbunden sind. An der weiteren Schmalseite ist ebenfalls eine Naht 40 vorgesehen, die sich über einen Teil der Länge der Schmalseite erstreckt, beispielsweise zwischen 20 % bis 80 % der Länge der Schmalseite. Ein unverbundener Bereich der Lagen 2' an der vierten Schmalseite bildet eine Einströmöffnung 9 aus, in die ein Stutzen 11 eines Staubsaugers einsteckbar ist. Die Einströmöffnung 9 umfasst einen Saum 7, an dem ein Federelement 10 angeordnet ist, um die Einströmöffnung 9 in eine abgedichtete Position vorzuspannen, wie dies bei dem Ausführungsbeispiel der Figur 1 erläutert wurde.

Figur 5 zeigt einen Staubsaugerbeutel 1' ähnlich zu Figur 4, wobei die Einströmöffnung 9 an einer Schmalseite mittig angeordnet ist und an gegenüberliegenden Seiten der Einströmöffnung 9 eine Naht 40 vorgesehen ist. Ein unverbundener Bereich der Lagen 2' an der Schmalseite bildet die Einströmöffnung 9 aus, die von einem Saum 7 mit einem Federelement 10 umgeben ist.

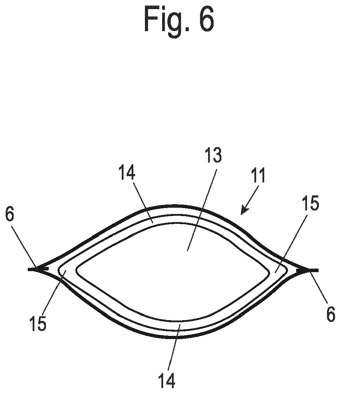

In Figur 6 ist eine Schnittansicht durch den Stutzen 11 im Bereich der Einströmöffnung 9 gezeigt, allerdings ohne das Federelement 10 und den Saum 7. Der Stutzen 11 besitzt einen rohrförmigen Kanal 13, der im Querschnitt im Wesentlichen oval ausgebildet ist und eine größere Erstreckung in eine Längsrichtung als senkrecht hierzu aufweist. Hierzu weist der Stutzen 11 zwei gegenüberliegende Wandabschnitte 14 mit einem geringeren Krümmungsradius auf als zwei Spitzen 15, die benachbart zu den Verbindungsnähten 6 an den Längsseiten 5 angeordnet sind. Dadurch kann der Staubsaugerbeutel 1 oder 1' im Bereich der Einströmöffnung 9 besser abgedichtet werden.

Der Staubsaugerbeutel 1 kann insbesondere in einen Staubsauger mit einer länglichen Gehäuseform eingesetzt werden, wie sie von batteriebetriebenen Staubsaugern bekannt sind, die auch als "Akku Sticks" bezeichnet werden.

### Bezugszeichenliste

- 1, 1': Staubsaugerbeutel
- 2, 2': Lage
- 3, 3': Schmalseite
- 4: Schmalseite
- 5: Längsseite
- 6: Verbindungsnaht
- 7: Saum
- 8: Naht
- 9: Einströmöffnung
- 10: Federelement
- 11: Stutzen
- 12: Spitze
- 13: Kanal
- 14: Wandabschnitt
- 15: Spitze
- 20: Lage
- 40: Naht

## Patentansprüche

1. Staubsaugerbeutel (1, 1') mit zwei Lagen (2, 2', 20) aus Filtermaterial, die randseitig an mindestens drei Seiten (3, 5) zur Bildung eines Innenraumes miteinander verbunden sind, wobei an einer vierten Seite (4) zwischen den beiden Lagen (2, 2', 20) zumindest bereichsweise eine Einströmöffnung (9) ausgebildet ist, in die ein Stutzen (11) zur Verbindung mit einem Staubsauger einsteckbar ist, und an der Einströmöffnung (9) ein Federelement (10) vorgesehen ist, das die beiden Lagen (2, 2', 20) in eine geschlossene Position vorspannt,
**dadurch gekennzeichnet, dass** an der Einströmöffnung (9) ein Saum an den beiden Lagen (2, 2', 20) vorgesehen ist, in den das Federelement (10) eingefügt ist und das Federelement (10) als Blattfeder ausgebildet ist, die am Rand der Einströmöffnung (9) um etwa 180° umgebogen ist.

2. Staubsaugerbeutel nach Anspruch 1, **dadurch gekennzeichnet, dass** sich die Einströmöffnung (9) vollständig über die Länge der vierten Seite (4) erstreckt.

3. Staubsaugerbeutel nach Anspruch 1 oder 2, **dadurch gekennzeichnet, dass** der Staubsaugerbeutel (1, 1') in Draufsicht gesehen zwei Längsseiten (5) und zwei Schmalseiten (3, 4) aufweist und die Einströmöffnung (9) an einer der Schmalseiten (4) vorgesehen ist.

4. Staubsaugerbeutel nach Anspruch 3, **dadurch gekennzeichnet, dass** die Längsseiten (5) um mindestens dreimal länger sind als die Schmalseiten (3, 4).

5. Staubsaugerbeutel nach einem der vorhergehenden Ansprüche, **dadurch gekennzeichnet, dass** an einer Innenseite der Einströmöffnung (9) eine Dichtlage, insbesondere aus einem bauschigen Vlies, vorgesehen ist.

6. Staubsaugerbeutel nach einem der vorhergehenden Ansprüche, **dadurch gekennzeichnet, dass** das Filtermaterial aus einem ein- oder mehrlagigen Vliesstoff hergestellt ist.

7. Staubsaugerbeutel nach einem der vorhergehenden Ansprüche, **dadurch gekennzeichnet, dass** zum Verschließen der Einströmöffnung (9) mindestens ein Klettverschluss, Profilverschluss mit zwei ineinandergreifenden Profilen, ein Druckknopf, ein Niet, ein Magnet, eine Klemmleiste, eine Quetschklemme und/oder eine Ringfeder vorgesehen ist.

8. Staubsauger mit einem Staubsaugerbeutel nach einem der vorhergehenden Ansprüche und einem angetriebenen Gebläse und einer im Wesentlichen rohrförmigen Kammer zur Aufnahme des Staubsaugerbeutels .

9. Staubsauger nach Anspruch 8, **dadurch gekennzeichnet, dass** der Staubsauger eine Halteeinrichtung aufweist, die den Staubsaugerbeutel (1, 1') im Bereich der Einströmöffnung (9) fixiert.

10. Staubsauger nach Anspruch 8 oder 9, **dadurch gekennzeichnet, dass** an einem Stutzen des Staubsaugers zur Fixierung des Staubsaugerbeutels (1, 1') Haltemittel in Form vom Rillen, Nuten, Rippen, Magneten und/oder Klemmelementen vorgesehen sind.

11. Staubsauger nach einem der Ansprüche 8 bis 10, **dadurch gekennzeichnet, dass** der Stutzen zumindest im Bereich der Einströmöffnung in der eingesetzten Position im Querschnitt im Wesentlichen oval ausgebildet ist.

12. Staubsauger nach einem der Ansprüche 8 bis 11, **dadurch gekennzeichnet, dass** der Staubsauger einen mechanischen Auswerfer aufweist, mittels dem der Staubsaugerbeutel (1, 1') von dem Stutzen abstreifbar ist.

## Claims

1. Vacuum cleaner bag (1, 1') having two layers (2, 2', 20) made of filter material which are connected to one another at the edges on at least three sides (3, 5) in order to form an inner chamber, wherein an inflow opening (9) is formed at least in regions on a fourth side (4) between the two layers (2, 2', 20), into which inflow opening (9) a connector (11) can be inserted for connection to a vacuum cleaner, and a spring element (10) is provided at the inflow opening (9), which pretensions the two layers (2, 2', 20) into a closed position **characterized in that** a hem is provided at the inflow opening (9) on the two layers (2, 2', 20), into which a closure element and/or a spring element (10) is/are inserted and the spring element (10) is designed as a leaf spring which is bent through approximately 180° at the edge of the inflow opening (9).

2. Vacuum cleaner bag according to claim 1, **characterized in that** the inflow opening (9) extends completely over the length of the fourth side (4).

3. Vacuum cleaner bag according to claim 1 or 2, **characterized in that** the vacuum cleaner bag (1, 1') has two longitudinal sides (5) and two narrow sides (3, 4), as seen in plan view, and the inflow opening (9) is provided on one of the narrow sides (4).

4. Vacuum cleaner bag according to claim 3, **characterized in that** the longitudinal sides (5) are at least three times longer than the narrow sides (3, 4).

5. Vacuum cleaner bag according to one of the preceding claims, **characterized in that** a sealing layer, in particular made of a bulky nonwoven, is provided on an inside of the inflow opening (9).

6. Vacuum cleaner bag according to one of the preceding claims, **characterized in that** the filter material is made of a single-layer or multilayer nonwoven fabric.

7. Vacuum cleaner bag according to one of the preceding claims, **characterized in that** at least one Velcro fastener, profile fastener with two interlocking profiles, a snap fastener, a rivet, a magnet, a clamping strip, a pinch clip and/or an annular spring is provided for closing the inflow opening (9).

8. Vacuum cleaner with a vacuum cleaner bag according to one of the preceding claims, said vacuum cleaner comprising a driven fan and a substantially tubular chamber for accommodating the vacuum cleaner bag.

9. Vacuum cleaner according to claim 8, **characterized in that** the vacuum cleaner has a holding device which fixes the vacuum cleaner bag (1, 1') in the region of the inflow opening (9).

10. Vacuum cleaner according to claim 8 or 9, **characterized in that** holding means in the form of grooves, slots, ribs, magnets and/or clamping elements are provided on a connector of the vacuum cleaner for fixing the vacuum cleaner bag (1, 1').

11. Vacuum cleaner according to one of claims 8 to 10, **characterized in that** the connector, at least in the region of the inflow opening in the inserted position, is substantially oval in cross-section.

12. Vacuum cleaner according to one of claims 8 to 11, **characterized in that** the vacuum cleaner has a mechanical ejector by means of which the vacuum cleaner bag (1, 1') can be stripped from the connector.

## Revendications

1. Sac d'aspirateur (1, 1') compose de deux couches (2, 2', 20) en un matériau de filtre et qui sont reliées entre elles au bord sur au moins trois côtés (3, 5) pour former un volume intérieur, un quatrième côté (4) étant formé entre les deux couches (2, 2', 20) au moins par zones avec un orifice d'entrée (9) dans lequel on engage un embout (11) pour être relié à l'aspirateur et à l'orifice d'entrée (9) et d'un élément de ressort (10) qui précontraint les deux couches (2, 2', 20) dans une position fermée,
sac **caractérisé en ce que**
l'orifice d'entrée (9) comporte un ourlet sur les deux couches (2, 2', 20) dans lequel est inséré l'élément de ressort (10) et cet élément de ressort (10) est sous la forme d'un ressort-lame courbé autour du bord de l'orifice d'entrée (9) sur environ 180°.

2. Sac d'aspirateur selon la revendication 1,
**caractérisé en ce que**
l'orifice d'entrée (9) s'étend complètement sur la longueur du quatrième côté (4).

3. Sac d'aspirateur selon la revendication 1 ou 2,
**caractérisé en ce que**
le sac d'aspirateur (1, 1') en vue de dessus a deux grands côtés (5) et deux petits côtés (3, 4) dans lesquels il est prévu un orifice d'entrée (9) dans l'un des petits côtés (4).

4. Sac d'aspirateur selon la revendication 3,
**caractérisé en ce que**
les grands côtés (5) sont au moins trois fois plus longs que les petits côtés (3, 4).

5. Sac d'aspirateur selon l'une des revendications précédentes,
**caractérisé en ce que**
un côté intérieur de l'orifice d'entrée (9) a une couche d'étanchéité, notamment en un non-tissé bouffant.

6. Sac d'aspirateur selon l'une des revendications précédentes,
**caractérisé en ce que**
le matériau de filtre est un non-tissé à une ou plusieurs couches.

7. Sac d'aspirateur selon l'une des revendications précédentes,
**caractérisé en ce que**
pour fermer l'orifice d'entrée (9) il est prévu au moins une fermeture à griffes, une fermeture à profils avec deux profils s'interpénétrant, un bouton pression, un rivet, un aimant, une lame de pincement, une lame d'écrasement et/ou un ressort annulaire.

8. Aspirateur comportant un sac d'aspirateur selon l'une des revendications précédentes et une soufflante entraînée ainsi qu'une chambre essentiellement tubulaire pour recevoir le sac d'aspirateur.

9. Aspirateur selon la revendication 8,
**caractérisé en ce que**
l'aspirateur comporte une installation de maintien pour fixer le sac d'aspirateur (1, 1') dans la région de l'orifice d'entrée (9).

10. Aspirateur selon la revendication 8 ou 9,
**caractérisé en ce que**
un embout de l'aspirateur comporte un moyen de maintien sous la forme de nervures, de rainures, de bossages, d'aimants ou d'éléments de serrage pour fixer le sac d'aspirateur (1, 1').

11. Aspirateur selon l'une des revendications 8 à 10,
**caractérisé en ce que**
dans la zone de l'orifice d'entrée, en position mise en place, l'embout a au moins en section une forme principalement ovale.

12. Aspirateur selon l'une des revendications 8 à 11,
**caractérisé en ce que**
l'aspirateur comporte un éjecteur mécanique pour enlever le sac d'aspirateur (1, 1') de l'embout.
